# EUROPEAN PATENT APPLICATION

(11) **EP 2 557 824 A1**
(43) Date of publication of application: **13.02.2013**
(21) Application number: 10853064.3
(22) Date of filing: 13.06.2010
(51) Int. Cl.: H04W 8/00

(54) **METHOD, SYSTEM AND NODE B FOR INDICATING STATE INFORMATION**

(71) Applicant: ZTE Corporation, Shenzhen, Guangdong 518057 (CN)
(72) Inventor: KE, Yazhu, Shenzhen Guangdong 518057 (CN); CHENG, Xiang, Shenzhen Guangdong 518057 (CN); LIU, Lin, Shenzhen Guangdong 518057 (CN)
(74) Representative: Ahmad, Sheikh Shakeel
(86) International application number: PCT/CN2010/073976
(87) International publication number: WO 2011/156954

(57) **Abstract**

A method, system and Node B for indicating state information are disclosed in the present invention, wherein, the indication method includes: starting or stopping a compression mode between a terminal and a Node B; and the Node B informing a serving radio network controller of the terminal of current compression mode state information of the terminal, so as to make the serving radio network controller acquire a current compression mode state of the terminal. With the present invention, it enables the serving radio network controller to be informed of the current compression mode state of the terminal, and then enables the serving radio network controller to make a measurement decision on the terminal better.

## Description

### Technical Field

The present invention relates to the field of radio communication, and particularly, to a method, system and Node B for indicating state information.

### Background of the Related Art

With the continuous evolution of radio network technology of the communication, from the 2nd generation Global System Mobile (GSM) to the 3rd generation Wideband Code Division Multiple Access (WCDMA) system, and then to the 3rd generation Enhanced Universal Radio Access Network (E-UTRAN) system, the network deployment of operators depends on the demand of users, and systems of various standards coexist. Currently, a common radio network function of the operators is defined as that: the 2nd generation GSM system is mainly used to bear voices, the 3rd generation WCDMA system is mainly used to bear packet domain services, session services and video services, and with regard to the 3rd generation E-UTRAN system, the emphasis is to bear ultra-high speed packet domain services.

Therefore, with respect to the existing network deployment, the inter-system mobility between the 2nd generation GSM system and 3rd generation WCDMA system is very important. Moreover, in the near future, with regard to the mobility management of the 3rd generation E-UTRAN system, such as handing over to a hot area of the E-UTRAN system, it will also become important. Meanwhile, inter-frequency handover based on load balancing between carrier frequencies of each layer is also necessary in the network with multi-carrier-frequency networking.

In the handover process resulted from the above inter-system mobility managements and the load balancing between carrier frequencies of each layer, a target system and a target carrier frequency are both required to be measured in the aforehand preparation phase, so as to make a handover decision accurately.

A compression mode plays a very important role in the inter-carrier measurement and inter-system measurement. When the compression mode is adopted, a terminal is not required to be configured with dual receiver and can measure non-serving carrier frequencies and frequencies of other systems. When the terminal, which is only configured with one receiver, moves from the 3rd generation WCDMA system to an area which is only covered by the 2nd generation GSM system, only the compression mode can be used to perform the inter-system measurement. Similarly, the compression mode also can be used for the terminal getting in and out a multi-carrier-frequency coverage area of the 3rd generation WCDMA system. In the compression mode, the terminal can measure another non-serving carrier frequency while does not lose any data transmitted over serving carrier frequencies.

The compression mode is defined as a transmission mode, and with this mode, data transmission will be compressed in a time domain to generate a transmission gap. The receiver of the terminal can be tuned to another carrier frequency for measurement using this period of transmission gap.

The transmission gap is described and determined by a transmission gap pattern sequence. Each transmission gap pattern sequence is identified by a transmission gap pattern sequence identifier uniquely, and can be only used for one transmission gap pattern sequence measurement purpose, namely, one measurement purpose of measurements such as frequency division duplex measurement/time division duplex measurement/GSM carrier Received Signal Strength Indication measurement/GSM base station identity color code initial identification/GSM base station identity color code identification reconfirmation/multi-carrier-frequency measurement/Enhanced Universal Radio Access (E-UTRA) measurement and so on.

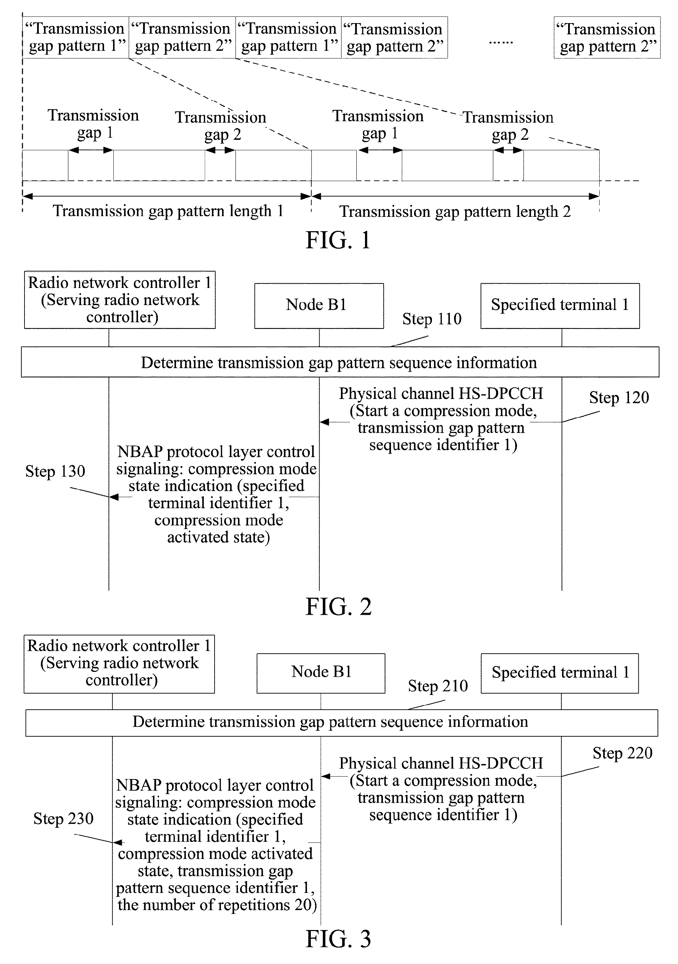

Each transmission gap pattern sequence is as shown in FIG. 1, which includes 2 alternative transmission gap patterns: transmission gap pattern 1 and transmission gap pattern 2. Each kind of transmission gap pattern provides one or two transmission gaps within one transmission gap pattern length. In addition, each transmission gap pattern sequence also can include a transmission gap Connection Frame Number (CFN) for indicating the time of starting/stopping the compression model and the number of repetitions of the transmission gap pattern and so on. All these parameters are determined according to the transmission gap pattern sequence measurement purpose.

Since each transmission gap pattern sequence measurement purpose needs a transmission gap pattern sequence, when multiple measurements are performed simultaneously, e.g. if the two measurements, GSM carrier Received Signal Strength Indication measurement and GSM base station identity color code initial identification, are performed simultaneously, a situation that all transmission gap pattern sequences are processed simultaneously in parallel may occur. In such a case, it must be guaranteed that all the transmission gap pattern sequences are not overlapped with each other, or the transmission gaps described and determined by all the transmission gap pattern sequences can not be fallen into the same radio frame. Otherwise, the terminal can not complete the measurements related to the overlapped transmission gap pattern sequences.

In the related art, the control right on starting and stopping the compression mode is placed at a Radio Network Controller (RNC). The terminal reports the radio signal quality of the current serving cell/carrier frequency to the RNC (if the radio signal quality of the current serving cell/carrier frequency is lower than a certain threshold), the RNC judges whether it is required to perform the inter-carrier/inter-system measurement (if the radio signal quality of the current serving cell is poor, it may be required to prepare to hand over to inter-carrier/inter-system neighboring cells). If it is required to perform the inter-carrier/inter-system measurement, the RNC informs a Node B and the terminal of the transmission gap pattern sequence when starting. The Node B does not perform data transmission in the transmission gaps described and determined by the transmission gap pattern sequence, and the terminal does not perform data transmission in the transmission gaps described and determined by the transmission gap pattern sequence and performs the inter-carrier/inter-system measurement of the transmission gap pattern sequence measurement purpose. After obtaining a measurement result from the inter-carrier/inter-system measurement of the terminal, the RNC can decide to stop the transmission gap pattern sequence, and inform the Node B and terminal. The Node B and terminal exits the compression mode, and perform normal data transmission and reception.

In the above process, it is generally required to start the compression mode in advance in engineering, that is, the start threshold of the compression mode should be set to be easily triggered, so as to guarantee that there can be enough time to complete the inter-carrier/inter-system measurement before a call drop of the terminal happens. Therefore, it will cause that the coverage boundary of the cell becomes small, the cell coverage can not be used effectively, and the duration time of the compression mode is relative long, which also has negative effects on the system capacity and user throughput.

### Summary of the Invention

In consideration that the handover reliability can be increased by accelerating the handover process, thus, especially in an area where the radio signal quality worsens rapidly, the risk of a user call drop can be reduced by accelerating the handover process. The later the start time of compression mode, the better; and the shorted the duration time of compression mode, the better, so as to improve the system capacity and user throughput. Therefore, at present, a possible optimization technique is: shifting the control right placed in a radio network controller in the related art to a terminal or a Node B, and the terminal or the Node B controlling the start/stop of the compression mode (e.g. if the terminal judges that the radio signal quality of the current serving cell is poor, and it may be required to prepare to hand over to inter-carrier/inter-system neighboring cells, the compression mode is started; if the terminal judges that the radio signal quality of the current serving cell gets better or the terminal has obtained a measurement result, the compression mode is stopped). Correspondingly, when the terminal decides to perform the start/stop, the terminal informs the Node B of information of the transmission gap pattern sequence used when starting/stopping the compression mode. Moreover, the Node B can decide to start/stop the compression mode, when the Node B decides to perform the start/stop, the Node B informs the terminal of information of the transmission gap pattern sequence used when starting/stopping the compression mode. Then, the Node B does not perform data transmission in transmission gaps described and determined by the transmission gap pattern sequence, and the terminal does not perform data reception in the transmission gaps described and determined by the transmission gap pattern sequence and performs the inter-carrier/inter-system measurement of the transmission gap pattern sequence measurement purpose.

However, one problem exists when this optimization technique is applied in engineering.

In the situations, such as the terminal deciding to start/stop the compression mode, or the Node B deciding to start/stop the compression mode, and, the terminal and Node B generating the transmission gaps according to the transmission gap pattern sequence when the compression mode is started, and the terminal and Node B stopping the transmission gap pattern sequence when the compression mode is stopped, the terminal and Node B only perform signaling control coordination and transmission gap processing with each other, and the radio network controller, as a third party control node except the terminal and Node B, is not informed.

Therefore, the following problem exists: when the radio network controller prepares a handover decision due to the inter-carrier measurement and inter-system measurement caused by reasons of the system side such as load balancing and so on which can not be predicted by the terminal and Node B, and if the above optimization technique is applied, it may fail to process or process improperly for the radio network controller is lack of essential informed information. For example, after a terminal 1 informs the Node B to start the inter-frequency compression mode, the radio network controller is not informed at the point, and since the load is excessively heavy in the cell at the moment, the radio network controller decides that part of terminals need to hand over to another system, thus, at the point, the radio network controller may select the terminal 1 and inform the Node B and terminal 1 to start the compression mode of which the measurement purpose is the inter-system measurement. In fact, a situation that transmission gaps of the compression mode of the inter-frequency/inter-system measurement are overlapped occurs at the point, therefore the terminal 1 fails to execute effective measurement on the compression mode with any measurement purpose, and finally the terminal 1 dose not hand over timely and the call drops.

The technical problem required to be solved by the present invention is to provide a method, system and Node B for indicating state information, which makes a serving radio network controller be informed of the current compression mode state of a terminal, and then makes the serving radio network controller perform a measurement decision on the terminal better.

In order to solve the above technical problem, the present invention provides a method for indicating state information, which comprises:
starting or stopping a compression mode between a terminal and a Node B; and
the Node B informing a serving radio network controller of the terminal of current compression mode state information of the terminal, so as to make the serving radio network controller acquire a current compression mode state of the terminal.

Preferably, before starting the compression mode between the terminal and the Node B, the method further comprises:
the terminal, the Node B and the serving radio network controller pre-determining information of a transmission gap pattern sequence used when starting the compression mode; or
the serving radio network controller determining the information of the transmission gap pattern sequence used when starting the compression mode, and informing the Node B and the terminal.

Preferably, in the step of informing the Node B and the terminal,
if the Node B is connected to the serving radio network controller directly through an Interconnection of type B (IUB) interface, the serving radio network controller informs the Node B of the information of the transmission gap pattern sequence through a Node B Application Part (NBAP) protocol layer control signaling;
if the Node B is not connected to the serving radio network controller directly through the IUB interface, the serving radio network controller informs a non-serving radio network controller connected to the Node B directly through the IUB interface of the information of the transmission gap pattern sequence through a Radio Network Subsystem Application Part (RNSAP) protocol layer control signaling, and the non-serving radio network controller informs the Node B of the information of the transmission gap pattern sequence through the NBAP protocol layer control signaling; and
the serving radio network controller informs the terminal of the information of the transmission gap pattern sequence through a Radio Resource Control (RRC) protocol layer control signaling.

Preferably, the information of the transmission gap pattern sequence includes: transmission gap pattern sequence identifier information, transmission gap pattern sequence measurement purpose information, information of transmission gap pattern 1 and/or transmission gap pattern 2, and information of transmission gaps provided by each transmission gap pattern within one transmission gap pattern length.

Preferably, the information of the transmission gap pattern sequence further includes: information of the number of repetitions of the transmission gap pattern.

Preferably, in the step of starting or stopping a compression mode between a terminal and a Node B,
the terminal decides to start or stop the compression mode, or, the Node B decides to start or stop the compression mode.

Preferably, in the step of starting a compression mode between a terminal and a Node B,
when the terminal decides to start the compression mode, the terminal informs the Node B of an action of starting the compression mode and the transmission gap pattern sequence used when starting the compression mode, through a High Speed Dedicated Physical Control Channel (HS-DPCCH);
when the Node B decides to start the compression mode, the Node B informs the terminal of the action of starting the compression mode and the transmission gap pattern sequence used when starting the compression mode, by sending a High Speed Shared Control Channel (HS-SCCH) order through an HS-SCCH.

Preferably, in the step of the Node B informing a serving radio network controller of current compression mode state information of the terminal,
if the Node B is connected to the serving radio network controller directly through an Interconnection of type B (IUB) interface, the Node B informs the serving radio network controller of the current compression mode state information of the terminal through a Node B Application Part (NBAP) protocol layer control signaling, and the NBAP protocol layer control signaling carries identifier information of the terminal and indicates the current compression mode state;
if the Node B is not connected to the serving radio network controller directly through the IUB interface, the Node B informs a non-serving radio network controller connected to the Node B directly through the IUB interface of the current compression mode state information of the terminal through the NBAP protocol layer control signaling, and the non-serving radio network controller informs the serving radio network controller of the current compression mode state information of the terminal through a Radio Network Subsystem Application Part (RNSAP) protocol layer control signaling; the NBAP protocol layer control signaling and the RNSAP protocol layer control signaling both carry the identifier information of the terminal and indicate the current compression mode state.

Preferably, when the compression mode is started between the terminal and the Node B:
the NBAP protocol layer control signaling indicates that the current compression mode state is activated, and the NBAP protocol layer control signaling further carries the current transmission gap pattern sequence identifier information of the started the compression mode and/or the number of repetitions of the transmission gap pattern of the transmission gap pattern sequence; and/or
the RNSAP protocol layer control signaling indicates that the current compression mode state is activated, and the RNSAP protocol layer control signaling further carries the current transmission gap pattern sequence identifier information of the started the compression mode and/or the number of repetitions of the transmission gap pattern of the transmission gap pattern sequence;
when the compression mode is stopped between the terminal and the Node B:
   the NBAP protocol layer control signaling indicates that the current compression mode state is deactivated, and the NBAP protocol layer control signaling further carries the current transmission gap pattern sequence identifier information of the stopped the compression mode; and/or
   the RNSAP protocol layer control signaling indicates that the current compression mode state is deactivated, and the RNSAP protocol layer control signaling further carries the current transmission gap pattern sequence identifier information of the stopped the compression mode.

In order to solve the above technical problem, the present invention provides a Node B, which comprises an indication module, wherein:
the indication module is configured to: after a compression mode is started or stopped between a terminal and the Node B, inform a serving radio network controller of the terminal of current compression mode state information of the terminal.

Preferably, the Node B further comprises a decision module, wherein:
the decision module is configured to: when it is decided to start the compression mode, inform the terminal of an action of starting the compression mode and a transmission gap pattern sequence used when starting the compression mode, by sending a High Speed Shared Control Channel (HS-SCCH) order through an HS-SCCH.

Preferably, the indication module is configured to:
if the Node B is connected to the serving radio network controller directly through an Interconnection of type B (IUB) interface, inform the serving radio network controller of the current compression mode state information of the terminal through a Node B Application Part (NBAP) protocol layer control signaling;
if the Node B is not connected to the serving radio network controller directly through the IUB interface, inform a non-serving radio network controller connected to the Node B directly through the IUB interface of the current compression mode state information of the terminal through the NBAP protocol layer control signaling, so as to make the non-serving radio network controller inform the serving radio network controller of the current compression mode state information of the terminal through a Radio Network Subsystem Application Part (RNSAP) protocol layer control signaling;
wherein, the NBAP protocol layer control signaling carries identifier information of the terminal and indicates a current compression mode state.

In order to solve the above technical problem, the present invention provides a system for indicating state information, which comprises: a terminal, a Node B and a serving radio network controller of the terminal, wherein:
the Node B is configured to: after a compression mode is started or stopped between the terminal and the Node B, inform the serving radio network controller of the terminal of current compression mode state information of the terminal.

Preferably, the serving radio network controller is configured to: determine information of a transmission gap pattern sequence used when starting the compression mode, and inform the Node B and the terminal; or pre-determine the information of the transmission gap pattern sequence used when starting the compression mode with the terminal and the Node B.

Preferably, the Node B is configured to:
if the Node B is connected to the serving radio network controller directly through an Interconnection of type B (IUB) interface, inform the serving radio network controller of the current compression mode state information of the terminal through a Node B Application Part (NBAP) protocol layer control signaling;
if the Node B is not connected to the serving radio network controller directly through the IUB interface, inform a non-serving radio network controller connected to the Node B directly through the IUB interface of the current compression mode state information of the terminal through the NBAP protocol layer control signaling, so as to make the non-serving radio network controller inform the serving radio network controller of the current compression mode state information of the terminal through a Radio Network Subsystem Application Part (RNSAP) protocol layer control signaling;
wherein, the NBAP protocol layer control signaling carries identifier information of the terminal and indicates a current compression mode state.

In the present invention, the Node B informs the serving radio network controller of the current compression mode state information of the terminal, which makes the serving radio network controller be informed of the current compression mode state of the terminal, and then makes the serving radio network controller perform a measurement decision on the terminal better.

### Brief Description of Drawings

FIG. 1 is a schematic diagram of a transmission gap pattern sequence.
FIG. 2 is a schematic diagram of a processing process according to the example 1 of the present invention.
FIG. 3 is a schematic diagram of a processing process according to the example 2 of the present invention.
FIG. 4 is a schematic diagram of a processing process according to the example 3 of the present invention.
FIG. 5 is a schematic diagram of a processing process according to the example 4 of the present invention.
FIG. 6 is a schematic diagram of a processing process according to the example 5 of the present invention.
FIG. 7 is a schematic diagram of a processing process according to the example 6 of the present invention.
FIG. 8 is a schematic diagram of a processing process according to the example 7 of the present invention.
FIG. 9 is a schematic diagram of a processing process according to the example 8 of the present invention.
FIG. 10 is a schematic diagram of a processing process according to the example 9 of the present invention.
FIG. 11 is a schematic diagram of a processing process according to the example 10 of the present invention.
FIG. 12 is a schematic diagram of a processing process according to the example 11 of the present invention.
FIG. 13 is a schematic diagram of a processing process according to the example 12 of the present invention.
FIG. 14 is a schematic diagram of a Node B according to the example of the present invention.

### Preferred Embodiments of the Present Invention

The basic conception of the present invention is: a Node B informing a serving radio network controller of a terminal of current compression mode state information of the terminal, so as to make the serving radio network controller be informed of a current compression mode state of the terminal, thereby making the serving radio network controller perform a measurement decision on the terminal better.

Specifically, following steps can be included.

In step 1, the terminal, Node B and serving radio network controller pre-determine information of a transmission gap pattern sequence used when starting a compression mode; or the serving radio network controller determines the information of the transmission gap pattern sequence used when starting the compression mode, and informs the Node B and the terminal.

Specifically, when the serving radio network controller is adopted to determine the information of the transmission gap pattern sequence used when starting the compression mode, and inform the Node B and the terminal:
if the Node B is connected to the serving radio network controller directly through an Interconnection of type B (IUB) interface, the serving radio network controller informs the Node B of the information of the transmission gap pattern sequence through a Node B Application Part (NBAP) protocol layer control signaling;
if the Node B is not connected to the serving radio network controller directly through the IUB interface, the serving radio network controller informs a non-serving radio network controller connected to the Node B directly through the IUB interface of the information of the transmission gap pattern sequence through a Radio Network Subsystem Application Part (RNSAP) protocol layer control signaling, and the non-serving radio network controller informs the Node B of the information of the transmission gap pattern sequence through the NBAP protocol layer control signaling;
the serving radio network controller informs the terminal of the information of the transmission gap pattern sequence through a Radio Resource Control (RRC) protocol layer control signaling; and

The information of the transmission gap pattern sequence includes: transmission gap pattern sequence identifier information, transmission gap pattern sequence measurement purpose information, information of transmission gap pattern 1 and/or transmission gap pattern 2, and information of transmission gaps provided by each transmission gap pattern within one transmission gap pattern length; and also can include: information of the number of repetitions of the transmission gap pattern.

In step 2, the compression mode is started or stopped between the terminal and the Node B.

The terminal can decide to start or stop the compression mode; when the terminal decides to start the compression mode, the terminal informs the Node B of an action of starting the compression mode and the transmission gap pattern sequence used when starting the compression mode, through a High Speed Dedicated Physical Control Channel (HS-DPCCH).

The Node B also can decide to start or stop the compression mode; when the Node B decides to start the compression mode, the Node B informs the terminal of the action of starting the compression mode and the transmission gap pattern sequence used when starting the compression mode, by sending a High Speed Shared Control Channel (HS-SCCH) order through an HS-SCCH.

In step 3, the Node B informs the serving radio network controller of the terminal of the current compression mode state information of the terminal, so as to make the serving radio network controller acquire the current compression mode state of the terminal.

If the Node B is connected to the serving radio network controller directly through the IUB interface, the Node B informs the serving radio network controller of the current compression mode state information of the terminal through the NBA protocol layer control signaling, and the NBAP protocol layer control signaling carries identifier information of the terminal and indicates the current compression mode state; in the condition that the compression mode is started, the NBAP protocol layer control signaling indicates that the current compression mode state is activated, and the NBAP protocol layer control signaling also can carry the current transmission gap pattern sequence identifier information of the started the compression mode and/or the number of repetitions of the transmission gap pattern of the transmission gap pattern sequence; in the condition that the compression mode is stopped, the NBAP protocol layer control signaling indicates that the current compression mode state is deactivated, and the NBAP protocol layer control signaling also can carry the current transmission gap pattern sequence identifier information of the stopped the compression mode;

If the Node B is not connected to the serving radio network controller directly through the IUB interface, the Node B informs the non-serving radio network controller connected to the Node B directly through the IUB interface of the current compression mode state information of the terminal through the NBAP protocol layer control signaling, and the non-serving radio network controller informs the serving radio network controller of the current compression mode state information of the terminal through the RNSAP protocol layer control signaling; the NBAP protocol layer control signaling and the RNSAP protocol layer control signaling both carry the identifier information of the terminal and indicate the current compression mode state; in the condition that the compression mode is started, the NBAP protocol layer control signaling and the RNSAP protocol layer control signaling indicate that the current compression mode state is activated, and also can carry the current transmission gap pattern sequence identifier information of the started the compression mode and/or the number of repetitions of the transmission gap pattern of the transmission gap pattern sequence; in the condition that the compression mode is stopped, the NBAP protocol layer control signaling and the RNSAP protocol layer control signaling indicate that the current compression mode state is deactivated, and also can carry the current transmission gap pattern sequence identifier information of the stopped the compression mode.

The technical scheme of the present invention will be described in detail in combination with the accompanying drawings and examples below.

In a radio communication system, the IUB interface is a logic interface between a radio network controller and the Node B. An Interconnection of RNC (IUR) interface is an interface which is used by the radio network controller for performing signaling and data interaction with other radio network controllers, and is an interconnection bond between radio network subsystems.

The serving radio network controller is a kind of the radio network controller, and if one radio network controller is responsible for the radio connection between a certain terminal and a Universal Terrestrial Radio Access Network (UTRAN), that radio network controller is precisely the serving radio network controller of this terminal.

The physical channel HS-DPCCH is an uplink control channel, which is used to bear feedback information of acknowledgement/negative acknowledgement on receiving downlink data successfully with regard to the receiving of downlink data, and bear quality feedback information of the receiving quality of downlink data.

In the physical channel HS-DPCCH, a domain bearing the quality feedback information of the receiving quality of downlink data is called as a channel quality indication domain. The channel quality indication domain consists of 5 bits. In the related art, values 1-30 have been used. In the following examples, values 31 and 32 will be used. Wherein, when the value of the channel quality indication domain is 31, it indicates that the compression mode is started; when the value is 32, it indicates that the compression mode is stopped.

In the physical channel HS-DPCCH, a domain bearing the acknowledgement/negative acknowledgement information with regard to the receiving condition of downlink data is called as an acknowledgement domain. The acknowledgement domain consists of 10 bits. In the related art, values from 1 to 145 are not used. In the following examples, values from 1 to 7 will be used. Wherein, the values from 1 to 7 of the acknowledgement domain respectively indicate that the transmission gap pattern sequence identifier is used to identify the transmission gap pattern sequence.

The physical channel HS-SCCH is used to bear information required by a demodulation of a High Speed Downlink Shared Channel (HS-DSCH), and is a downlink control channel. The Node B can send an HS-SCCH order to the terminal through the physical channel HS-SCCH, so as to order the terminal to make a corresponding control.

In the HS-SCCH order, there are 3 bits which are used to indicate a type of the high speed shared control channel order, and there are 3 bits which are used to indicate a specific high speed shared control channel order of this type. In the related art, only the types of two high speed shared control channel orders of which the values are 0 and 1 are used.

In the following examples, a new type of the high speed shared control channel order of which the value is 2 will be used to indicate that the compression mode is started; and a new type of the high speed shared control channel order of which the value is 3 will be used to indicate that the compression mode is stopped.

In the following examples, the 3 bits which are used to indicate the specific high speed shared control channel order of this type will be used, and the values from 1 to 7 of the 3 bits will be used to respectively represent that transmission gap pattern sequence identifier to identify the transmission gap pattern sequence.

In addition, following signalings are used in the examples of the present invention:
the RRC protocol layer control signaling, which is a control signaling between the radio network controller and terminal provided by an RRC protocol layer;
the NBAP protocol layer control signaling, which is a control signaling between the radio network controller and Node B provided by a NBAP protocol layer;
the RNSAP protocol layer control signaling, which is a control signaling between the radio network controllers provided by an RNSAP protocol layer.

### Example 1

The processing process of the example 1 is as shown in FIG. 2, and the steps are described as follows.

An established scenario: a specified terminal 1 is located at a cell 1, the cell 1 belongs to a Node B1, and the Node B 1 is connected to a radio network controller 1 directly through an IUB interface. The radio network controller 1 is responsible for the radio connection between the terminal 1 and a UTRAN, that is, the radio network controller 1 is a serving radio network controller of the terminal 1.

In step 110, the terminal 1 and Node B1, and the radio network controller 1 pre-determine information of the transmission gap pattern sequence used when starting a compression mode, which specifically includes that:
a transmission gap pattern sequence is used for a measurement purpose of frequency division duplex measurement, and the transmission gap pattern sequence is identified through an identifier 1. The transmission gap pattern sequence 1 includes 2 kinds of alternative transmission gap patterns: transmission gap pattern 1 and transmission gap pattern 2. Each transmission gap pattern provides one transmission gap within one transmission gap pattern length. The information also can include that: the number of repetitions of the transmission gap pattern sequence 1 is 20.

In step 120, the compression mode is started between the terminal 1 and Node B1. The terminal 1 decides to start the compression mode, and informs the Node B1 of an action of starting the compression mode and the transmission gap pattern sequence used when starting the compression mode through a physical channel HS-DPCCH. Wherein, the action of starting the compression mode is indicated through a value 31 in a channel quality indication domain of the physical channel HS-DPCCH; the transmission gap pattern sequence used when starting the compression mode is identified through a transmission gap pattern sequence identifier 1; and that a value in an acknowledgement domain of the physical channel HS-DPCCH is 1 indicates the transmission gap pattern sequence identifier 1.

In step 130, the Node B 1 informs the radio network controller 1 of the state information of the currently started compression mode of the terminal 1, and the radio network controller 1 obtains the state information of the currently started compression mode of the terminal 1. Wherein, the Node B1 sends an NBAP protocol layer control signaling to the radio network controller 1. The signaling carries a terminal identifier 1 to distinguish the specified terminal 1. A current compression mode state carried by the signaling is an activated state.

### Example 2

The processing process of the example 2 is as shown in FIG. 3, and the steps are described as follows.

An established scenario: a specified terminal 1 is located at a cell 1, the cell 1 belongs to a Node B1, and the Node B 1 is connected to a radio network controller 1 directly through an IUB interface. The radio network controller 1 is responsible for the radio connection between the terminal 1 and a UTRAN, that is, the radio network controller 1 is a serving radio network controller of the terminal 1.

In step 210, the terminal 1 and Node B1, and the radio network controller 1 pre-determine information of transmission gap pattern sequence used when starting a compression mode, which specifically includes that:
a transmission gap pattern sequence is used for a measurement purpose of frequency division duplex measurement, and the transmission gap pattern sequence is identified through an identifier 1. The transmission gap pattern sequence 1 includes 2 kinds of alternative transmission gap patterns: transmission gap pattern 1 and transmission gap pattern 2. Each transmission gap pattern provides one transmission gap within one transmission gap pattern length. The information also can include that: the number of repetitions of the transmission gap pattern sequence 1 is 20.

In step 220, the compression mode is started between the terminal 1 and Node B1. The terminal 1 decides to start the compression mode, and informs the Node B1 of an action of starting the compression mode and the transmission gap pattern sequence used when starting the compression mode through a physical channel HS-DPCCH. Wherein, the action of starting the compression mode is represented through a value 31 in a channel quality indication domain of the physical channel HS-DPCCH; the transmission gap pattern sequence used when starting the compression mode is identified through a transmission gap pattern sequence identifier 1; and that a value in an acknowledgement domain of the physical channel HS-DPCCH is 1 indicates the transmission gap pattern sequence identifier 1.

In step 230, the Node B 1 informs the radio network controller 1 of the state information of the currently started compression mode of the terminal 1, and the radio network controller 1 obtains the state information of the currently started compression mode of the terminal 1. Wherein, the Node B1 sends an NBAP protocol layer control signaling to the radio network controller 1. The signaling carries a terminal identifier 1 to distinguish the specified terminal 1. A current compression mode state carried by the signaling is an activated state. The signaling optionally carries the transmission gap pattern sequence identifier 1 of the currently started compression mode. The number of repetitions of transmission gap patterns of the transmission gap pattern sequence of the currently started compression mode optionally carried by the signaling is 20.

### Example 3

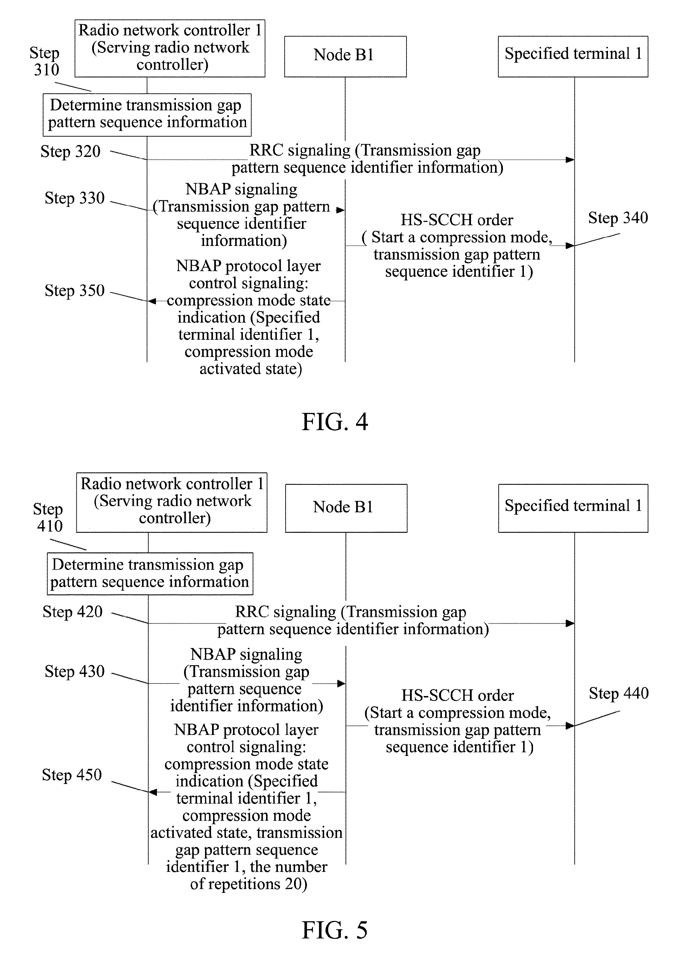

The processing process of the example 3 is as shown in FIG. 4, and the steps are described as follows.

An established scenario: a specified terminal 1 is located at a cell 1, the cell 1 belongs to a Node B1, and the Node B 1 is connected to a radio network controller 1 directly through an IUB interface. The radio network controller 1 is responsible for the radio connection between the terminal 1 and a UTRAN, that is, the radio network controller 1 is a serving radio network controller of the terminal 1.

In step 310, the radio network controller 1 decides information of a transmission gap pattern sequence used when starting a compression mode, which specifically includes that:
a transmission gap pattern sequence is used for a measurement purpose of frequency division duplex measurement, and the transmission gap pattern sequence is identified through an identifier 1. The transmission gap pattern sequence 1 includes 2 kinds of alternative transmission gap patterns: transmission gap pattern 1 and transmission gap pattern 2. Each transmission gap pattern provides one transmission gap within one transmission gap pattern length. The information also can include that: the number of repetitions of the transmission gap pattern sequence 1 is 20.

In step 320, the radio network controller 1 informs the terminal 1 of the information of the transmission gap pattern sequence used when starting the compression mode through an RRC protocol layer control signaling.

In step 330, the radio network controller 1 informs the Node B 1 of the information of the transmission gap pattern sequence used when starting the compression mode through an NBAP protocol layer control signaling.

In step 340, the compression mode is started between the terminal 1 and Node B1. The Node B1 decides to start the compression mode, and informs the terminal 1 of an action of starting the compression mode and the transmission gap pattern sequence used when starting the compression mode, by sending a High Speed Shared Control Channel (HS-SCCH) order through a physical channel HS-SCCH. Wherein, the action of starting the compression mode is indicated through a new type of the high speed shared control channel order of which the value is 2; the transmission gap pattern sequence used when starting the compression mode is identified through a transmission gap pattern sequence identifier 1; and that a value of 3 bits, which are used to indicate a specific high speed shared control channel order under this type, of the specific high speed shared control channel order is 1 indicates the transmission gap pattern sequence identifier 1.

In step 350, the Node B 1 informs the radio network controller 1 of the state information of the currently started compression mode of the terminal 1, and the radio network controller 1 obtains the state information of the currently started compression mode of the terminal 1. Wherein, the Node B1 sends the NBAP protocol layer control signaling to the radio network controller 1. The signaling carries a terminal identifier 1 to distinguish the specified terminal 1. The current compression mode state carried by the signaling is an activated state.

### Example 4

The processing process of the example 4 is as shown in FIG. 5, and the steps are described as follows.

An established scenario: a specified terminal 1 is located at a cell 1, the cell 1 belongs to a Node B1, and the Node B 1 is connected to a radio network controller 1 directly through an IUB interface. The radio network controller 1 is responsible for the radio connection between the terminal 1 and a UTRAN, that is, the radio network controller 1 is a serving radio network controller of the terminal 1.

In step 410, the radio network controller 1 decides information of a transmission gap pattern sequence used when starting a compression mode, which specifically includes that:
a transmission gap pattern sequence is used for a measurement purpose of frequency division duplex measurement, and the transmission gap pattern sequence is identified through an identifier 1. The transmission gap pattern sequence 1 includes 2 kinds of alternative transmission gap patterns: transmission gap pattern 1 and transmission gap pattern 2. Each transmission gap pattern provides one transmission gap within one transmission gap pattern length. The information also can include that: the number of repetitions of the transmission gap pattern sequence 1 is 20.

In step 420, the radio network controller 1 informs the terminal 1 of the information of the transmission gap pattern sequence used when starting the compression mode through an RRC protocol layer control signaling.

In step 430, the radio network controller 1 informs the Node B 1 of the information of the transmission gap pattern sequence used when starting the compression mode through an NBAP protocol layer control signaling.

In step 440, the compression mode is started between the terminal 1 and Node B1. The Node B1 decides to start the compression mode, and informs the terminal 1 of an action of starting the compression mode and the transmission gap pattern sequence used when starting the compression mode, by sending a High Speed Shared Control Channel (HS-SCCH) order through a physical channel HS-SCCH. Wherein, the action of starting the compression mode is indicated through a new type of the high speed shared control channel order of which the value is 2; the transmission gap pattern sequence used when starting the compression mode is identified through a transmission gap pattern sequence identifier 1; and that a value of 3 bits, which are used to indicate a specific high speed shared control channel order under this type, of the specific high speed shared control channel order is 1 indicates the transmission gap pattern sequence identifier 1.

In step 450, the Node B1 informs the radio network controller 1 of the state information of the currently started compression mode of the terminal 1, and the radio network controller 1 obtains the state information of the currently started compression mode of the terminal 1. Wherein, the Node B1 sends the NBAP protocol layer control signaling to the radio network controller 1. The signaling carries a terminal identifier 1 to distinguish the specified terminal 1. The current compression mode state carried by the signaling is an activated state. The signaling optionally carries the transmission gap pattern sequence identifier 1 of the currently started compression mode. The number of repetitions of transmission gap patterns of the transmission gap pattern sequence of the currently started compression mode optionally carried by the signaling is 20.

### Example 5

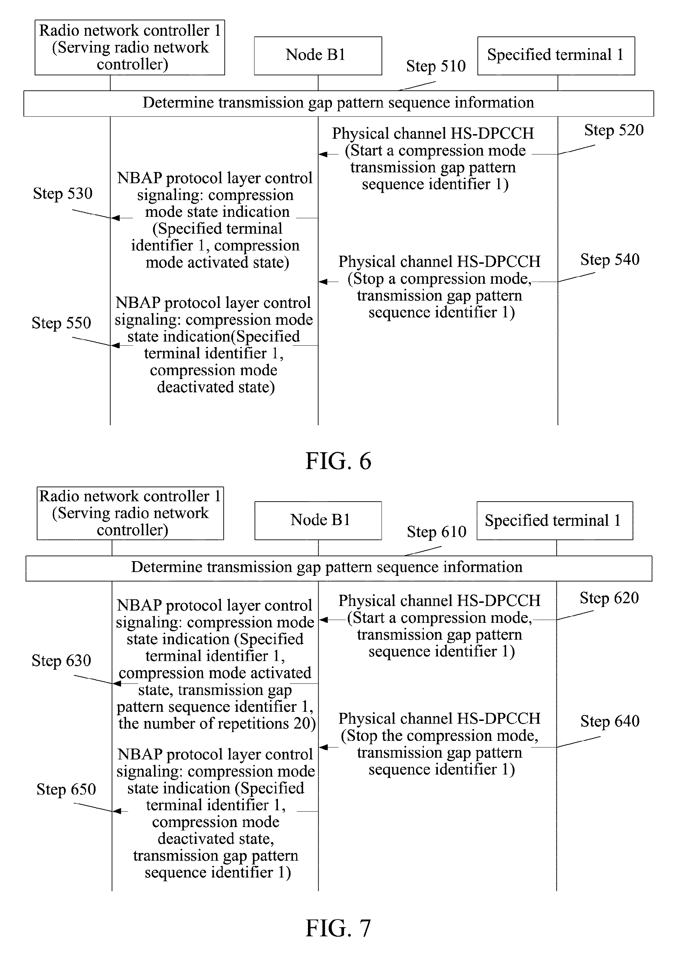

The processing process of the example 5 is as shown in FIG. 6, and the steps are described as follows.

An established scenario: a specified terminal 1 is located at a cell 1, the cell 1 belongs to a Node B1, and the Node B 1 is connected to a radio network controller 1 directly through an IUB interface. The radio network controller 1 is responsible for the radio connection between the terminal 1 and a UTRAN, that is, the radio network controller 1 is a serving radio network controller of the terminal 1.

In step 510, the terminal 1 and Node B1, and the radio network controller 1 pre-determine information of transmission gap pattern sequence used when starting a compression mode, which specifically includes that:
a transmission gap pattern sequence is used for a measurement purpose of frequency division duplex measurement, and the transmission gap pattern sequence is identified through an identifier 1. The transmission gap pattern sequence 1 includes 2 kinds of alternative transmission gap patterns: transmission gap pattern 1 and transmission gap pattern 2. Each transmission gap pattern provides one transmission gap within one transmission gap pattern length. The information also can include that: the number of repetitions of the transmission gap pattern sequence 1 is 20.

In step 520, the compression mode is started between the terminal 1 and Node B1. The terminal 1 decides to start the compression mode, and informs the Node B1 of an action of starting the compression mode and the transmission gap pattern sequence used when starting the compression mode, through a physical channel HS-DPCCH. Wherein, the action of starting the compression mode is indicated through a value 31 in a channel quality indication domain of the physical channel HS-DPCCH; the transmission gap pattern sequence used when starting the compression mode, is identified through a transmission gap pattern sequence identifier 1; and that a value of in acknowledgement domain of the physical channel HS-DPCCH is 1 indicates the transmission gap pattern sequence identifier 1.

In step 530, the Node B 1 informs the radio network controller 1 of the state information of the currently started compression mode of the terminal 1, and the radio network controller 1 obtains the state information of the currently started compression mode of the terminal 1. Wherein, the Node B1 sends an NBAP protocol layer control signaling to the radio network controller 1. The signaling carries a terminal identifier 1 to distinguish the specified terminal 1. The currently started compression mode state carried by the signaling is an activated state.

In step 540, the compression mode is stopped between the terminal 1 and Node B1. The terminal 1 decides to stop the compression mode, and informs the Node B1 of an action of stopping the compression mode and the transmission gap pattern sequence used when stopping the compression mode through the physical channel HS-DPCCH. Wherein, the action of stopping the compression mode is indicated through a value 32 in the channel quality indication domain of the physical channel HS-DPCCH; the transmission gap pattern sequence used when stopping the compression mode is identified through the transmission gap pattern sequence identifier 1; and that the value of the acknowledgement domain of the physical channel HS-DPCCH is 1 indicates the transmission gap pattern sequence identifier 1.

In step 550, the Node B1 informs the radio network controller 1 of the state information of the currently stopped compression mode of the terminal 1, and the radio network controller 1 obtains the state information of the currently stopped compression mode of the terminal 1. Wherein, the Node B1 sends the NBAP protocol layer control signaling to the radio network controller 1. The signaling carries the terminal identifier 1 to distinguish the specified terminal 1. The current compression mode state carried by the signaling is a deactivated state.

### Example 6

The processing process of the example 6 is as shown in FIG. 7, and the steps are described as follows.

An established scenario: a specified terminal 1 is located at a cell 1, the cell 1 belongs to a Node B1, and the Node B 1 is connected to a radio network controller 1 directly through an IUB interface. The radio network controller 1 is responsible for the radio connection between the terminal 1 and a UTRAN, that is, the radio network controller 1 is a serving radio network controller of the terminal 1.

In step 610, the terminal 1 and Node B1, and the radio network controller 1 pre-determine information of transmission gap pattern sequence used when starting a compression mode, which specifically includes that:
a transmission gap pattern sequence is used for a measurement purpose of frequency division duplex measurement, and the transmission gap pattern sequence is identified through an identifier 1. The transmission gap pattern sequence 1 includes 2 kinds of alternative transmission gap patterns: transmission gap pattern 1 and transmission gap pattern 2. Each transmission gap pattern provides one transmission gap within one transmission gap pattern length. The information also can include that: the number of repetitions of the transmission gap pattern sequence 1 is 20.

In step 620, the compression mode is started between the terminal 1 and Node B1. The terminal 1 decides to start the compression mode, and informs the Node B1 of an action of starting the compression mode and the transmission gap pattern sequence used when starting the compression mode, through a physical channel HS-DPCCH. Wherein, the action of starting the compression mode is indicated through a value 31 in a channel quality indication domain of the physical channel HS-DPCCH; the transmission gap pattern sequence used when starting the compression mode is identified through a transmission gap pattern sequence identifier 1; and that a value of an acknowledgement domain of the physical channel HS-DPCCH is 1 indicates the transmission gap pattern sequence identifier 1.

In step 630, the Node B1 informs the radio network controller 1 of the state information of the currently started compression mode of the terminal 1, and the radio network controller 1 obtains the state information of the currently started compression mode of the terminal 1. Wherein, the Node B1 sends an NBAP protocol layer control signaling to the radio network controller 1. The signaling carries a terminal identifier 1 to distinguish the specified terminal 1. A current compression mode state carried by the signaling is an activated state. The signaling optionally carries the transmission gap pattern sequence identifier 1 of the currently started compression mode. The number of repetitions of transmission gap patterns of the transmission gap pattern sequence of the currently started compression mode optionally carried by the signaling is 20.

In step 640, the compression mode is stopped between the terminal 1 and Node B1. The terminal 1 decides to stop the compression mode, and informs the Node B1 of an action of stopping the compression mode and the transmission gap pattern sequence used when stopping the compression mode through the physical channel HS-DPCCH. Wherein, the action of stopping the compression mode is indicated through a value 32 in the channel quality indication domain of the physical channel HS-DPCCH; the stopped transmission gap pattern sequence is identified through the transmission gap pattern sequence identifier 1; and that the value of the acknowledgement domain of the physical channel HS-DPCCH is 1 indicates the transmission gap pattern sequence identifier 1.

In step 650, the Node B1 informs the radio network controller 1 of the state information of the currently stopped compression mode of the terminal 1, and the radio network controller 1 obtains the state information of the currently stopped compression mode of the terminal 1. Wherein, the Node B1 sends the NBAP protocol layer control signaling to the radio network controller 1. The signaling carries the terminal identifier 1 to distinguish the specified terminal 1. The current compression mode state carried by the signaling is a deactivated state. The signaling optionally carries the transmission gap pattern sequence identifier 1 of the currently stopped compression mode.

### Example 7

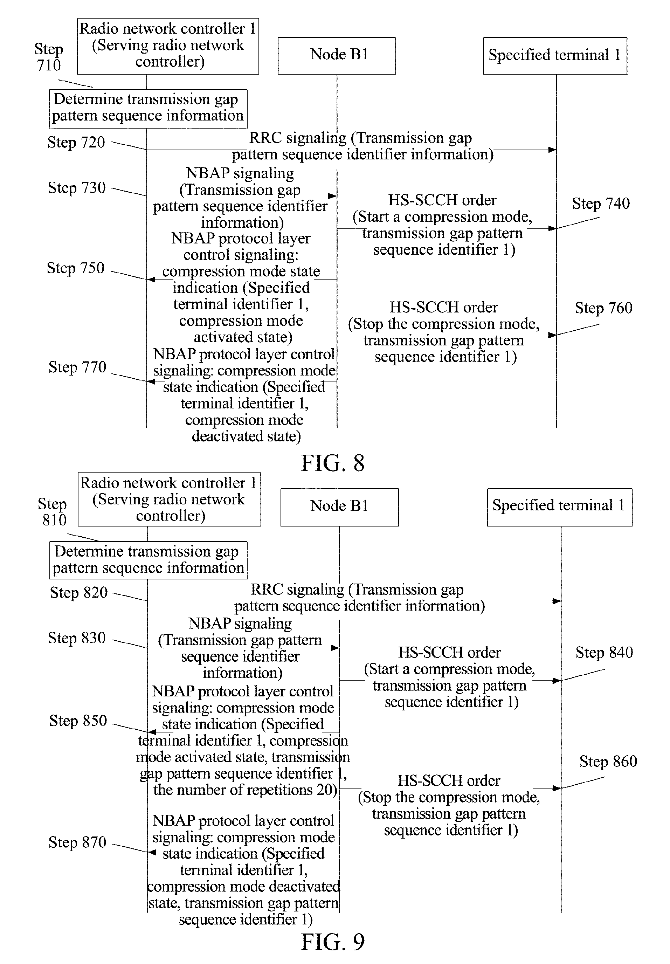

The processing process of the example 7 is as shown in FIG. 8, and the steps are described as follows.

An established scenario: a specified terminal 1 is located at a cell 1, the cell 1 belongs to a Node B1, and the Node B 1 is connected to a radio network controller 1 directly through an IUB interface. The radio network controller 1 is responsible for the radio connection between the terminal 1 and a UTRAN, that is, the radio network controller 1 is a serving radio network controller of the terminal 1.

In step 710, the radio network controller 1 decides information of a transmission gap pattern sequence used when starting a compression mode, which specifically includes that:
a transmission gap pattern sequence is used for a measurement purpose of frequency division duplex measurement, and the transmission gap pattern sequence is identified through an identifier 1. The transmission gap pattern sequence 1 includes 2 kinds of alternative transmission gap patterns: transmission gap pattern 1 and transmission gap pattern 2. Each transmission gap pattern provides one transmission gap within one transmission gap pattern length. The information also can include that: the number of repetitions of the transmission gap pattern sequence set 1 is 20.

In step 720, the radio network controller 1 informs the terminal 1 of the information of the transmission gap pattern sequence used when starting the compression mode through an RRC protocol layer control signaling.

In step 730, the radio network controller 1 informs the Node B 1 of the information of the transmission gap pattern sequence used when starting the compression mode through an NBAP protocol layer control signaling.

In step 740, the compression mode is started between the terminal 1 and Node B1. The Node B1 decides to start the compression mode, and informs the terminal 1 of an action of starting the compression mode and the transmission gap pattern sequence used when starting the compression mode, by sending a High Speed Shared Control Channel (HS-SCCH) order through a physical channel HS-SCCH. Wherein, the action of starting the compression mode is indicated through a new type of the high speed shared control channel order of which the value is 3; the transmission gap pattern sequence used when starting the compression mode is identified through a transmission gap pattern sequence identifier 1; and that a value of 3 bits, which are used to indicate a specific high speed shared control channel order under this type, of the specific high speed shared control channel order is 1indicates the transmission gap pattern sequence identifier 1.

In step 750, the Node B1 informs the radio network controller 1 of the state information of the currently started compression mode of the terminal 1, and the radio network controller 1 obtains the state information of the currently started compression mode of the terminal 1. Wherein, the Node B1 sends the NBAP protocol layer control signaling to the radio network controller 1. The signaling carries a terminal identifier 1 to distinguish the specified terminal 1. A current compression mode state carried by the signaling is an activated state.

In step 760, the compression mode is stopped between the terminal 1 and Node B1. The Node B1 decides to stop the compression mode, and informs the terminal 1 of an action of stopping the compression mode and the transmission gap pattern sequence used when stopping the compression mode, by sending the HS-SCCH order through the physical channel HS-SCCH. Wherein, the action of stopping the compression mode is indicated through the new type of the high speed shared control channel order of which the value is 3; the transmission gap pattern sequence used when stopping the compression mode is identified through the transmission gap pattern sequence identifier 1; and that the value of 3 bits, which are used to indicate a specific high speed shared control channel order under this type, of the specific high speed shared control channel order is 1 indicates the transmission gap pattern sequence identifier 1.

In step 770, the Node B1 informs the radio network controller 1 of the state information of the currently stopped compression mode of the terminal 1, and the radio network controller 1 obtains the state information of the currently stopped compression mode of the terminal 1. Wherein, the Node B1 sends the NBAP protocol layer control signaling to the radio network controller 1. The signaling carries the terminal identifier 1 to distinguish the specified terminal 1. The current compression mode state carried by the signaling is a deactivated state.

### Example 8

The processing process of the example 8 is as shown in FIG. 9, and the steps are described as follows.

An established scenario: a specified terminal 1 is located at a cell 1, the cell 1 belongs to a Node B1, and the Node B1 is connected to a radio network controller 1 directly through an IUB interface. The radio network controller 1 is responsible for the radio connection between the terminal 1 and a UTRAN, that is, the radio network controller 1 is a serving radio network controller of the terminal 1.

In step 810, the radio network controller 1 decides information of a transmission gap pattern sequence used when starting a compression mode, which specifically includes that:
a transmission gap pattern sequence is used for a measurement purpose of frequency division duplex measurement, and the transmission gap pattern sequence is identified through an identifier 1. The transmission gap pattern sequence 1 includes 2 kinds of alternative transmission gap patterns: transmission gap pattern 1 and transmission gap pattern 2. Each transmission gap pattern provides one transmission gap within one transmission gap pattern length. The information also can include that: the number of repetitions of the transmission gap pattern sequence 1 is 20.

In step 820, the radio network controller 1 informs the terminal 1 of the information of the transmission gap pattern sequence used when starting the compression mode through an RRC protocol layer control signaling.

In step 830, the radio network controller 1 informs the Node B1 of the information of the transmission gap pattern sequence used when starting the compression mode through an NBAP protocol layer control signaling.

In step 840, the compression mode is started between the terminal 1 and Node B1. The Node B1 decides to start the compression mode, and informs the terminal 1 of an action of starting the compression mode and the transmission gap pattern sequence used when starting the compression mode, by sending a High Speed Shared Control Channel (HS-SCCH) order through a physical channel HS-SCCH. Wherein, the action of starting the compression mode is indicated through a new type of the high speed shared control channel order of which the value is 2; the transmission gap pattern sequence used when starting the compression mode is identified through a transmission gap pattern sequence identifier 1; and that a value of 3 bits, which are used to indicate a specific high speed shared control channel order under this type, of the specific high speed shared control channel order is 1 indicates the transmission gap pattern sequence identifier 1.

In step 850, the Node B1 informs the radio network controller 1 of the state information of the currently started compression mode of the terminal 1, and the radio network controller 1 obtains the state information of the currently started compression mode of the terminal 1. Wherein, the Node B1 sends the NBAP protocol layer control signaling to the radio network controller 1. The signaling carries a terminal identifier 1 to distinguish the specified terminal 1. A current compression mode state carried by the signaling is an activated state. The signaling optionally carries the transmission gap pattern sequence identifier 1 of the currently started compression mode. The number of repetitions of transmission gap patterns of the transmission gap pattern sequence of the currently started compression mode optionally carried by the signaling is 20.

In step 860, the compression mode is stopped between the terminal 1 and Node B1. The Node B1 decides to stop the compression mode, and informs the terminal 1 of an action of stopping the compression mode and the transmission gap pattern sequence used when stopping the compression mode, by sending the HS-SCCH order through the physical channel HS-SCCH. Wherein, the action of stopping the compression mode is indicated through a new type of the high speed shared control channel order of which the value is 3; the transmission gap pattern sequence used when stopping the compression mode is identified through the transmission gap pattern sequence identifier 1; and that the value of 3 bits, which are used to indicate a specific high speed shared control channel order under this type, of the specific high speed shared control channel order is 1 indicates the transmission gap pattern sequence identifier 1.

In step 870, the Node B1 informs the radio network controller 1 of the state information of the currently stopped compression mode of the terminal 1, and the radio network controller 1 obtains the state information of the currently stopped compression mode of the terminal 1. Wherein, the Node B1 sends the NBAP protocol layer control signaling to the radio network controller 1. The signaling carries the terminal identifier 1 to distinguish the specified terminal 1. The current compression mode state carried by the signaling is a deactivated state. The signaling optionally carries the transmission gap pattern sequence identifier 1 of the currently stopped compression mode.

### Example 9

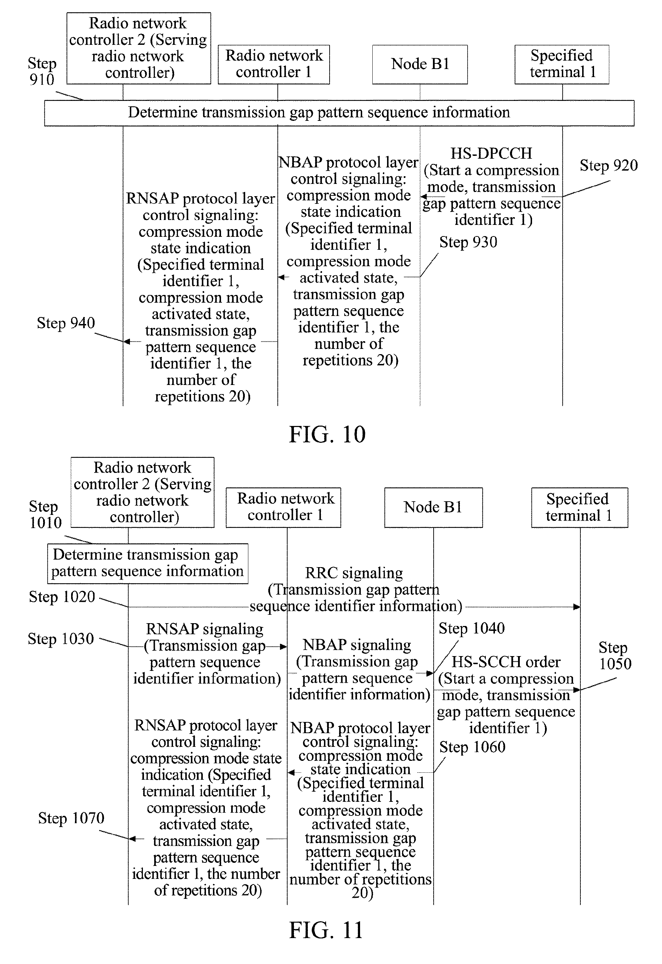

The processing process of the example 9 is as shown in FIG. 10, and the steps are described as follows.

An established scenario: a specified terminal 1 is located at a cell 1, the cell 1 belongs to a Node B1, and the Node B1 is connected to a radio network controller 1 directly through an IUB interface. A radio network controller 2 is connected to the radio network controller 1 directly through an IUR interface. The radio network controller 2 is responsible for the radio connection between the terminal 1 and a UTRAN, that is, the radio network controller 2 is a serving radio network controller of the terminal 1.

In step 910, the terminal 1 and Node B1, and the radio network controller 2 pre-determine information of transmission gap pattern sequence used when starting a compression mode, which specifically includes that:
a transmission gap pattern sequence is used for a measurement purpose of frequency division duplex measurement, and the transmission gap pattern sequence is identified through an identifier 1. The transmission gap pattern sequence 1 includes 2 kinds of alternative transmission gap patterns: transmission gap pattern 1 and transmission gap pattern 2. Each transmission gap pattern provides one transmission gap within one transmission gap pattern length. The information also can include that: the number of repetitions of the transmission gap pattern sequence 1 is 20.

In step 920, the compression mode is started between the terminal 1 and Node B1. The terminal 1 decides to start the compression mode, and informs the Node B1 of an action of starting the compression mode and the transmission gap pattern sequence used when starting the compression mode, through a physical channel HS-DPCCH. Wherein, the action of starting the compression mode is indicated through a value 31 in a channel quality indication domain of the physical channel HS-DPCCH; the transmission gap pattern sequence used when starting the compression mode is identified through a transmission gap pattern sequence identifier 1; and that a value of an acknowledgement domain of the physical channel HS-DPCCH is 1indicates the transmission gap pattern sequence identifier 1.

In step 930, the Node B1 informs the radio network controller 1 of the state information of the currently started compression mode of the terminal 1. Wherein, the Node B1 sends an NBAP protocol layer control signaling to the radio network controller 1. The signaling carries a terminal identifier 1 to distinguish the specified terminal 1. A current compression mode state carried by the signaling is an activated state. The signaling optionally carries the transmission gap pattern sequence identifier 1 of the currently started compression mode. The number of repetitions of transmission gap patterns of the transmission gap pattern sequence of the currently started compression mode optionally carried by the signaling is 20.

In step 940, the radio network controller 1 informs the radio network controller 2 of the state information of the currently started compression mode of the terminal 1, and the radio network controller 2 obtains the state information of the currently started compression mode of the terminal 1. Wherein, the radio network controller 1 sends an RNSAP protocol layer control signaling to the radio network controller 2. The signaling carries the terminal identifier 1 to distinguish the specified terminal 1. The current compression mode state carried by the signaling is the activated state. The signaling optionally carries the transmission gap pattern sequence identifier 1 of the currently started compression mode. The number of repetitions of transmission gap patterns of the transmission gap pattern sequence of the currently started compression mode optionally carried by the signaling is 20.

### Example 10

The processing process of the example 10 is as shown in FIG. 11, and the steps are described as follows.

An established scenario: a specified terminal 1 is located at a cell 1, the cell 1 belongs to a Node B1, and the Node B1 is connected to a radio network controller 1 directly through an IUB interface. A radio network controller 2 is connected to the radio network controller 1 directly through an IUR interface. The radio network controller 2 is responsible for the radio connection between the terminal 1 and a UTRAN, that is, the radio network controller 2 is a serving radio network controller of the terminal 1.

In step 1010, the radio network controller 2 decides information of a transmission gap pattern sequence used when starting a compression mode, which specifically includes that:
a transmission gap pattern sequence is used for a measurement purpose of frequency division duplex measurement, and the transmission gap pattern sequence is identified through an identifier 1. The transmission gap pattern sequence 1 includes 2 kinds of alternative transmission gap patterns: transmission gap pattern 1 and transmission gap pattern 2. Each transmission gap pattern provides one transmission gap within one transmission gap pattern length. The information also can include that: the number of repetitions of the transmission gap pattern sequence 1 is 20.

In step 1020, the radio network controller 2 informs the terminal 1 of the information of the transmission gap pattern sequence used when starting the compression mode through an RRC protocol layer control signaling.

In step 1030, the radio network controller 2 informs the radio network controller 1 of the information of the transmission gap pattern sequence used when starting the compression mode through an RNSAP protocol layer control signaling.

In step 1040, the radio network controller 1 informs the Node B1 of the information of the transmission gap pattern sequence used when starting the compression mode through an NBAP protocol layer control signaling.

In step 1050, the compression mode is started between the terminal 1 and Node B1. The Node B1 decides to start the compression mode, and informs the terminal 1 of an action of starting the compression mode and the transmission gap pattern sequence used when starting the compression mode, by sending a High Speed Shared Control Channel (HS-SCCH) order through a physical channel HS-SCCH. Wherein, the action of starting the compression mode is indicated through a new type of the high speed shared control channel order of which the value is 2; the transmission gap pattern sequence used when starting the compression mode is identified through a transmission gap pattern sequence identifier 1; and that a value of 3 bits, which are used to indicate a specific high speed shared control channel order under this type, of the specific high speed shared control channel order is 1 indicates the transmission gap pattern sequence identifier 1.

In step 1060, the Node B informs the radio network controller 1 of the state information of the currently started compression mode of the terminal 1. Wherein, the Node B1 sends the NBAP protocol layer control signaling to the radio network controller 1. The signaling carries a terminal identifier 1 to distinguish the specified terminal 1. A current compression mode state carried by the signaling is an activated state. The signaling optionally carries the transmission gap pattern sequence identifier 1 of the currently started compression mode. The number of repetitions of transmission gap patterns of the transmission gap pattern sequence of the currently started compression mode optionally carried by the signaling is 20.

In step 1070, the radio network controller 1 informs the radio network controller 2 of the state information of the currently started compression mode of the terminal 1, and the radio network controller 2 obtains the state information of the currently started compression mode of the terminal 1. Wherein, the radio network controller 1 sends the RNSAP protocol layer control signaling to the radio network controller 2. The signaling carries the terminal identifier 1 to distinguish the specified terminal 1. The current compression mode state carried by the signaling is the activated state. The signaling optionally carries the transmission gap pattern sequence identifier 1 of the currently started compression mode. The number of repetitions of transmission gap patterns of the transmission gap pattern sequence of the currently started compression mode optionally carried by the signaling is 20.

### Example 11

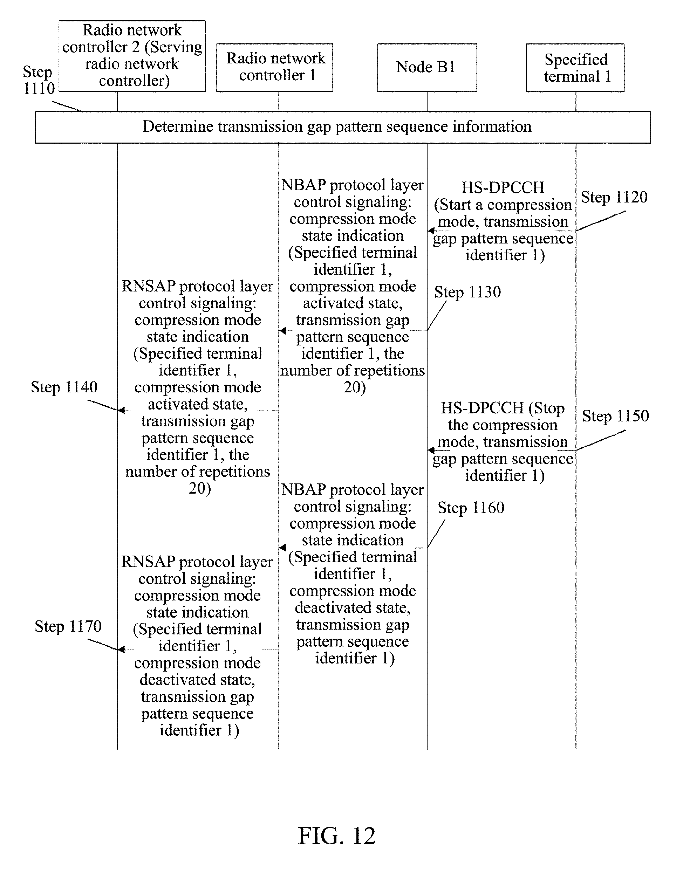

The processing process of the example 11 is as shown in FIG. 12, and the steps are described as follows.

An established scenario: a specified terminal 1 is located at a cell 1, the cell 1 belongs to a Node B1, and the Node B1 is connected to a radio network controller 1 directly through an IUB interface. A radio network controller 2 is connected to the radio network controller 1 directly through an IUR interface. The radio network controller 2 is responsible for the radio connection between the terminal 1 and a UTRAN, that is, the radio network controller 2 is a serving radio network controller of the terminal 1.

In step 1110, the terminal 1 and Node B1, and the radio network controller 2 pre-determine information of transmission gap pattern sequence used when starting a compression mode, which specifically includes that:
a transmission gap pattern sequence is used for a measurement purpose of frequency division duplex measurement, and the transmission gap pattern sequence is identified through an identifier 1. The transmission gap pattern sequence 1 includes 2 kinds of alternative transmission gap patterns: transmission gap pattern 1 and transmission gap pattern 2. Each transmission gap pattern provides one transmission gap within one transmission gap pattern length. The information also can include that: the number of repetitions of the transmission gap pattern sequence 1 is 20.

In step 1120, the compression mode is started between the terminal 1 and Node B1. The terminal 1 decides to start the compression mode, and informs the Node B1 of an action of starting the compression mode and the transmission gap pattern sequence used when starting the compression mode, through a physical channel HS-DPCCH. Wherein, the action of starting the compression mode is indicated through a value 31 in a channel quality indication domain of the physical channel HS-DPCCH; the transmission gap pattern sequence used when starting the compression mode is identified through a transmission gap pattern sequence identifier 1; and that a value of an acknowledgement domain of the physical channel HS-DPCCH is 1 indicates the transmission gap pattern sequence identifier 1.

In step 1130, the Node B1 informs the radio network controller 1 of the state information of the currently started compression mode of the terminal 1. Wherein, the Node B1 sends an NBAP protocol layer control signaling to the radio network controller 1. The signaling carries a terminal identifier 1 to distinguish the specified terminal 1. A current compression mode state carried by the signaling is an activated state. The signaling optionally carries the transmission gap pattern sequence identifier 1 of the currently started compression mode. The number of repetitions of transmission gap patterns of the transmission gap pattern sequence of the currently started compression mode optionally carried by the signaling is 20.

In step 1140, the radio network controller 1 informs the radio network controller 2 of the state information of the currently started compression mode of the terminal 1, and the radio network controller 2 obtains the state information of the currently started compression mode of the terminal 1. Wherein, the radio network controller 1 sends an RNSAP protocol layer control signaling to the radio network controller 2. The signaling carries the terminal identifier 1 to distinguish the specified terminal 1. The current compression mode state carried by the signaling is the activated state. The signaling optionally carries the transmission gap pattern sequence identifier 1 of the currently started compression mode. The number of repetitions of transmission gap patterns of the transmission gap pattern sequence of the currently started compression mode optionally carried by the signaling is 20.

In step 1150, the compression mode is stopped between the terminal 1 and Node B1. The terminal 1 decides to stop the compression mode, and informs the Node B1 of an action of stopping the compression mode and the transmission gap pattern sequence used when stopping the compression mode through the physical channel HS-DPCCH. Wherein, the action of stopping the compression mode is indicated through a value 32 in the channel quality indication domain of the physical channel HS-DPCCH; the transmission gap pattern sequence used when stopping the compression mode is identified through the transmission gap pattern sequence identifier 1; and that the value in the acknowledgement domain of the physical channel HS-DPCCH is 1 indicates the transmission gap pattern sequence identifier 1.

In step 1160, the Node B1 informs the radio network controller 1 of the state information of the currently stopped compression mode of the terminal 1. Wherein, the Node B1 sends the NBAP protocol layer control signaling to the radio network controller 1. The signaling carries the terminal identifier 1 to distinguish the specified terminal 1. The current compression mode state carried by the signaling is a deactivated state. The signaling optionally carries the transmission gap pattern sequence identifier 1 of the currently stopped compression mode.

In step 1170, the radio network controller 1 informs the radio network controller 2 of the state information of the currently started compression mode of the terminal 1. Wherein, the radio network controller 1 sends the RNSAP protocol layer control signaling to the radio network controller 2. The signaling carries the terminal identifier 1 to distinguish the specified terminal 1. The current compression mode state carried by the signaling is the deactivated state. The signaling optionally carries the transmission gap pattern sequence identifier 1 of the currently stopped compression mode.

### Example 12

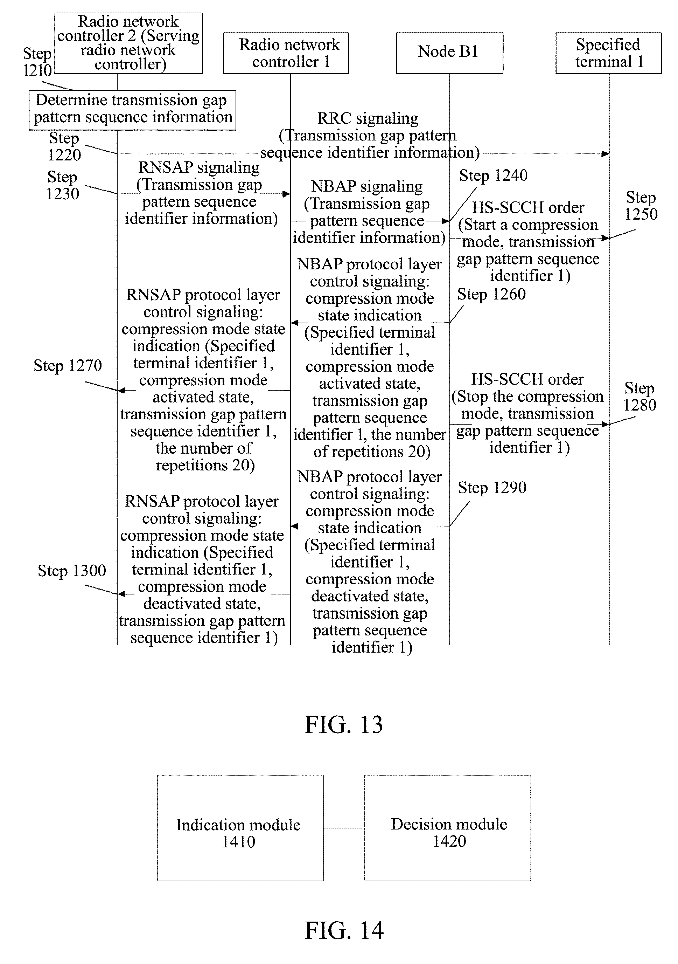

The processing process of the example 12 is as shown in FIG. 13, and the steps are described as follows.

An established scenario: a specified terminal 1 is located at a cell 1, the cell 1 belongs to a Node B1, and the Node B1 is connected to a radio network controller 1 directly through an IUB interface. A radio network controller 2 is connected to the radio network controller 1 directly through an IUR interface. The radio network controller 2 is responsible for the radio connection between the terminal 1 and a UTRAN, that is, the radio network controller 2 is a serving radio network controller of the terminal 1.

In step 1210, the radio network controller 2 decides information of a transmission gap pattern sequence used when starting a compression mode, which specifically includes that:
a transmission gap pattern sequence is used for a measurement purpose of frequency division duplex measurement, and the transmission gap pattern sequence is identified through an identifier 1. The transmission gap pattern sequence 1 includes 2 kinds of alternative transmission gap patterns: transmission gap pattern 1 and transmission gap pattern 2. Each transmission gap pattern provides one transmission gap within one transmission gap pattern length. The information also can include that: the number of repetitions of the transmission gap pattern sequence 1 is 20.

In step 1220, the radio network controller 2 informs the terminal 1 of the information of the transmission gap pattern sequence used when starting the compression mode through an RRC protocol layer control signaling.

In step 1230, the radio network controller 2 informs the radio network controller 1 of the information of the transmission gap pattern sequence used when starting the compression mode through an RNSAP protocol layer control signaling.

In step 1240, the radio network controller 1 informs the Node B1 of the information of the transmission gap pattern sequence used when starting the compression mode through an NBAP protocol layer control signaling.

In step 1250, the compression mode is started between the terminal 1 and Node B1. The Node B1 decides to start the compression mode, and informs the terminal 1 of an action of starting the compression mode and the transmission gap pattern sequence used when starting the compression mode by sending a High Speed Shared Control Channel (HS-SCCH) order through a physical channel HS-SCCH. Wherein, the action of starting the compression mode is indicated through a new type of the high speed shared control channel order of which the value is 2; the transmission gap pattern sequence used when starting the compression mode is identified through a transmission gap pattern sequence identifier 1; and that a value of 3 bits, which are used to indicate a specific high speed shared control channel order under this type, of the specific high speed shared control channel order is 1 indicates the transmission gap pattern sequence identifier 1.

In step 1260, the Node B1 informs the radio network controller 1 of the state information of the currently started compression mode of the terminal 1. Wherein, the Node B1 sends the NBAP protocol layer control signaling to the radio network controller 1. The signaling carries a terminal identifier 1 to distinguish the specified terminal 1. A current compression mode state carried by the signaling is an activated state. The signaling optionally carries the transmission gap pattern sequence identifier 1 of the currently started compression mode. The number of repetitions of transmission gap patterns of the transmission gap pattern sequence of the currently started compression mode optionally carried by the signaling is 20.

In step 1270, the radio network controller 1 informs the radio network controller 2 of the state information of the currently started compression mode of the terminal 1, and the radio network controller 2 obtains the state information of the currently started compression mode of the terminal 1. Wherein, the radio network controller 1 sends the RNSAP protocol layer control signaling to the radio network controller 2. The signaling carries the terminal identifier 1 to distinguish the specified terminal 1. The current compression mode state carried by the signaling is the activated state. The signaling optionally carries the transmission gap pattern sequence identifier 1 of the currently started compression mode. The number of repetitions of transmission gap patterns of the transmission gap pattern sequence of the currently started compression mode optionally carried by the signaling is 20.

In step 1280, the compression mode is stopped between the terminal 1 and Node B1. The Node B1 decides to stop the compression mode, and informs the terminal 1 of an action of stopping the compression mode and the transmission gap pattern sequence used when stopping the compression mode by sending the HS-SCCH order through the physical channel HS-SCCH. Wherein, the action of stopping the compression mode is indicated through a new type of the high speed shared control channel order of which the value is 3; the transmission gap pattern sequence used when stopping the compression mode is identified through the transmission gap pattern sequence identifier 1; and that the value of 3 bits, which are used to indicate a specific high speed shared control channel order under this type, of the specific high speed shared control channel order is 1 indicates the transmission gap pattern sequence identifier 1.

In step 1290, the Node B1 informs the radio network controller 1 of the state information of the currently stopped compression mode of the terminal 1. Wherein, the Node B1 sends the NBAP protocol layer control signaling to the radio network controller 1. The signaling carries the terminal identifier 1 to distinguish the specified terminal 1. The current compression mode state carried by the signaling is a deactivated state. The signaling optionally carries the transmission gap pattern sequence identifier 1 of the currently stopped compression mode.

In step 1300, the radio network controller 1 informs the radio network controller 2 of the state information of the currently stopped compression mode of the terminal 1. Wherein, the radio network controller 1 sends the RNSAP protocol layer control signaling to the radio network controller 2. The signaling carries the terminal identifier 1 to distinguish the specified terminal 1. The current compression mode state carried by the signaling is the deactivated state. The signaling optionally carries the transmission gap pattern sequence identifier 1 of the currently stopped compression mode.

A system for indicating state information in the example of the present invention comprises: a terminal, a Node B and a serving radio network controller of the terminal, wherein:
the Node B is configured to: after a compression mode is started or stopped between the terminal and the Node B, inform the serving radio network controller of the terminal of current compression mode state information of the terminal.

The serving radio network controller can be configured to: determine information of a transmission gap pattern sequence used when starting the compression mode, and inform the Node B and the terminal; or pre-determine the information of the transmission gap pattern sequence used when starting the compression mode with the terminal and the Node B.

The Node B is configured to: if the Node B is connected to the serving radio network controller directly through an Interconnection of type B (IUB) interface, inform the serving radio network controller of the current compression mode state information of the terminal through a Node B Application Part (NBAP) protocol layer control signaling; if the Node B is not connected to the serving radio network controller directly through the IUB interface, inform a non-serving radio network controller connected to the Node B directly through the IUB interface of the current compression mode state information of the terminal through the NBAP protocol layer control signaling, so as to make the non-serving radio network controller inform the serving radio network controller of the current compression mode state information of the terminal through a Radio Network Subsystem Application Part (RNSAP) protocol layer control signaling;
wherein, the NBAP protocol layer control signaling carries identifier information of the terminal and indicates a current compression mode state.

The functions of the above serving radio network controller, non-serving radio network controller, terminal and Node B may refer to the descriptions of the above method, which will not be repeated here.

As shown in FIG. 14, a Node B of the example of the present invention comprises an indication module1410, and also can comprise a decision module 1420, wherein:
the indication module 1410 is configured to: after a compression mode is started or stopped between a terminal and the Node B, inform a serving radio network controller of the terminal of current compression mode state information of the terminal.

The decision module 1420 is configured to: when it is decided to start the compression mode, inform the terminal of an action of starting the compression mode and a transmission gap pattern sequence used when starting the compression mode, by sending a High Speed Shared Control Channel (HS-SCCH) order through an HS-SCCH.

Specifically, the indication module 1410 can be configured to: if the Node B is connected to the serving radio network controller directly through an Interconnection of type B (IUB) interface, inform the serving radio network controller of the current compression mode state information of the terminal through a Node B Application Part (NBAP) protocol layer control signaling; if the Node B is not connected to the serving radio network controller directly through the IUB interface, inform a non-serving radio network controller connected to the Node B directly through the IUB interface of the current compression mode state information of the terminal through the NBAP protocol layer control signaling, so as to make the non-serving radio network controller inform the serving radio network controller of the current compression mode state information of the terminal through a Radio Network Subsystem Application Part (RNSAP) protocol layer control signaling;
wherein, the NBAP protocol layer control signaling carries identifier information of the terminal and indicates a current compression mode state.

The ordinary person skilled in the art can understand that all or part of the steps in the above method can be completed by a program instructing related hardware, and the program can be stored in a computer readable memory medium, such as a read-only memory, disk or optical disk and so on. Alternatively, all or part of the steps of the above examples also can be implemented by using one or multiple integrated circuits. Correspondingly, each module/unit in the above examples can be implemented in a form of hardware, and also can be implemented in a form of software function module. The present invention is not limited to any combination of hardware and software in a specific form.

Though the present invention makes the descriptions in combination with the specific examples, for the skilled in the art, modifications and changes can be made without departing from the spirit or scope of the present invention. These modifications and changes are regarded as within the scope of the present invention and the scope of the appended claims.

### Industrial Applicability

With the method, system and Node B for indicating the state information provided in the present invention, the Node B informs the serving radio network controller of the current compression mode state information of the terminal, which makes the serving radio network controller be informed of the current compression mode state of the terminal, and then makes the serving radio network controller perform a measurement decision on the terminal better.

## Claims

1. A method for indicating state information, comprising:
starting or stopping a compression mode between a terminal and a Node B; and
the Node B informing a serving radio network controller of the terminal of current compression mode state information of the terminal, so as to make the serving radio network controller acquire the current compression mode state of the terminal.

2. The method according to claim 1, wherein:
before starting the compression mode between the terminal and the Node B, the method further comprises:
the terminal, the Node B and the serving radio network controller pre-determining information of a transmission gap pattern sequence used when starting the compression mode; or
the serving radio network controller determining the information of the transmission gap pattern sequence used when starting the compression mode, and informing the Node B and the terminal.

3. The method according to claim 2, wherein:
in the step of informing the Node B and the terminal,
if the Node B is connected to the serving radio network controller directly through an Interconnection of type B (IUB) interface, the serving radio network controller informs the Node B of the information of the transmission gap pattern sequence through a Node B Application Part (NBAP) protocol layer control signaling;
if the Node B is not connected to the serving radio network controller directly through the IUB interface, the serving radio network controller informs a non-serving radio network controller connected to the Node B directly through the IUB interface of the information of the transmission gap pattern sequence through a Radio Network Subsystem Application Part (RNSAP) protocol layer control signaling, and the non-serving radio network controller informs the Node B of the information of the transmission gap pattern sequence through the NBAP protocol layer control signaling; and
the serving radio network controller informs the terminal of the information of the transmission gap pattern sequence through a Radio Resource Control (RRC) protocol layer control signaling.

4. The method according to claim 2, wherein:
the information of the transmission gap pattern sequence includes: transmission gap pattern sequence identifier information, transmission gap pattern sequence measurement purpose information, information of transmission gap pattern 1 and/or transmission gap pattern 2, and information of transmission gaps provided by each transmission gap pattern within one transmission gap pattern length.

5. The method according to claim 4, wherein:
the information of the transmission gap pattern sequence further includes: information of a number of repetitions of the transmission gap pattern.

6. The method according to claim 1, wherein:
in the step of starting or stopping a compression mode between a terminal and a Node B,
the terminal decides to start or stop the compression mode, or, the Node B decides to start or stop the compression mode.

7. The method according to claim 6, wherein:
in the step of starting a compression mode between a terminal and a Node B,
when the terminal decides to start the compression mode, the terminal informs the Node B of an action of starting the compression mode and the transmission gap pattern sequence used when starting the compression mode, through a High Speed Dedicated Physical Control Channel (HS-DPCCH);
when the Node B decides to start the compression mode, the Node B informs the terminal of the action of starting the compression mode and the transmission gap pattern sequence used when starting the compression mode, by sending a High Speed Shared Control Channel (HS-SCCH) order through an HS-SCCH.

8. The method according to claim 1, wherein:
in the step of the Node B informing a serving radio network controller of current compression mode state information of the terminal,
if the Node B is connected to the serving radio network controller directly through an Interconnection of type B (IUB) interface, the Node B informs the serving radio network controller of the current compression mode state information of the terminal through a Node B Application Part (NBAP) protocol layer control signaling, and the NBAP protocol layer control signaling carries identifier information of the terminal and indicates the current compression mode state;
if the Node B is not connected to the serving radio network controller directly through the IUB interface, the Node B informs a non-serving radio network controller connected to the Node B directly through the IUB interface of the current compression mode state information of the terminal through the NBAP protocol layer control signaling, and the non-serving radio network controller informs the serving radio network controller of the current compression mode state information of the terminal through a Radio Network Subsystem Application Part (RNSAP) protocol layer control signaling; the NBAP protocol layer control signaling and the RNSAP protocol layer control signaling both carry the identifier information of the terminal and indicate the current compression mode state.

9. The method according to claim 8, wherein:
when the compression mode is started between the terminal and the Node B:
the NBAP protocol layer control signaling indicates that the current compression mode state is activated, and the NBAP protocol layer control signaling further carries the current transmission gap pattern sequence identifier information of the started the compression mode and/or the number of repetitions of the transmission gap pattern of the transmission gap pattern sequence; and/or
the RNSAP protocol layer control signaling indicates that the current compression mode state is activated, and the RNSAP protocol layer control signaling further carries the current transmission gap pattern sequence identifier information of the started compression mode and/or the number of repetitions of the transmission gap pattern of the transmission gap pattern sequence;
when the compression mode is stopped between the terminal and the Node B:
the NBAP protocol layer control signaling indicates that the current compression mode state is deactivated, and the NBAP protocol layer control signaling further carries the current transmission gap pattern sequence identifier information of the stopped compression mode; and/or
the RNSAP protocol layer control signaling indicates that the current compression mode state is activated, and the RNSAP protocol layer control signaling further carries the current transmission gap pattern sequence identifier information of the stopped the compression mode.

10. A Node B, comprising an indication module, wherein:
the indication module is configured to: after a compression mode is started or stopped between a terminal and the Node B, inform a serving radio network controller of the terminal of current compression mode state information of the terminal.

11. The Node B according to claim 10, further comprising a decision module, wherein:
the decision module is configured to: when it is decided to start the compression mode, inform the terminal of an action of starting the compression mode and a transmission gap pattern sequence used when starting the compression mode, by sending a High Speed Shared Control Channel (HS-SCCH) order through an HS-SCCH.

12. The Node B according to claim 10 or 11, wherein:
the indication module is configured to:
if the Node B is connected to the serving radio network controller directly through an Interconnection of type B (IUB) interface, inform the serving radio network controller of the current compression mode state information of the terminal through a Node B Application Part (NBAP) protocol layer control signaling;
if the Node B is not connected to the serving radio network controller directly through the IUB interface, inform a non-serving radio network controller connected to the Node B directly through the IUB interface of the current compression mode state information of the terminal through the NBAP protocol layer control signaling, so as to make the non-serving radio network controller inform the serving radio network controller of the current compression mode state information of the terminal through a Radio Network Subsystem Application Part (RNSAP) protocol layer control signaling;
wherein, the NBAP protocol layer control signaling carries identifier information of the terminal and indicates a current compression mode state.

13. A system for indicating state information, comprising: a terminal, a Node B and a serving radio network controller of the terminal, wherein:
the Node B is configured to: after a compression mode is started or stopped between the terminal and the Node B, inform the serving radio network controller of the terminal of current compression mode state information of the terminal.

14. The system according to claim 13, wherein:
the serving radio network controller is configured to: determine information of a transmission gap pattern sequence used when starting the compression mode, and inform the Node B and the terminal; or pre-determine the information of the transmission gap pattern sequence used when starting the compression mode, with the terminal and the Node B.

15. The system according to claim 13, wherein:
the Node B is configured to:
if the Node B is connected to the serving radio network controller directly through an Interconnection of type B (IUB) interface, inform the serving radio network controller of the current compression mode state information of the terminal through a Node B Application Part (NBAP) protocol layer control signaling;
if the Node B is not connected to the serving radio network controller directly through the IUB interface, inform a non-serving radio network controller connected to the Node B directly through the IUB interface of the current compression mode state information of the terminal through the NBAP protocol layer control signaling, so as to make the non-serving radio network controller inform the serving radio network controller of the current compression mode state information of the terminal through a Radio Network Subsystem Application Part (RNSAP) protocol layer control signaling;
wherein, the NBAP protocol layer control signaling carries identifier information of the terminal and indicates a current compression mode state.
